# EUROPÄISCHE PATENTSCHRIFT

(11) **EP 2 304 265 B1**
(45) Veröffentlichungstag und Bekanntmachung des Hinweises auf die Patenterteilung: **21.08.2013**
(21) Anmeldenummer: 09765781.1
(22) Anmeldetag: 10.06.2009
(51) Int. Cl.: F16D 65/18

(54) **MEHRTEILIG GEBAUTER KOLBEN FÜR EINEN BREMSSATTEL EINER SCHEIBENBREMSE**
MULTI-PART PISTON CONSTRUCTION FOR A BRAKE SADDLE OF A DISK BRAKE
PISTON EN PLUSIEURS PARTIES POUR UN ÉTRIER D UN FREIN À DISQUE

(30) Priorität: 17.06.2008 DE 102008028412; 20.03.2009 DE 102009001712; 09.04.2009 DE 102009017167
(43) Veröffentlichungstag der Anmeldung: 06.04.2011
(73) Patentinhaber: Continental Teves AG & Co. OHG, 60488 Frankfurt (DE); Erdrich Beteiligungs GmbH, 77871 Renchen-Ulm (DE)
(72) Erfinder: WINKLER, Thomas, 55122 Mainz (DE); ZEIBIG, Uwe, 77855 Achern (DE); KOCH, Dirk, 35457 Lollar-Odenhausen (DE); KLIMT, Anja, 60488 Frankfurt/M. (DE); BAUER, Herwig, 61118 Bad Vilbel (DE)
(86) Internationale Anmeldenummer: PCT/EP2009/057175
(87) Internationale Veröffentlichungsnummer: WO 2009/153201

(56) Entgegenhaltungen:
- EP-A- 0 063 871
- EP-A- 0 396 231
- EP-A- 1 043 513
- WO-A-2009/053425
- GB-A- 1 240 222
- US-A- 5 350 042

## Beschreibung

Die Erfindung betrifft einen mehrteilig gebauten Kolben für einen hydraulisch und/oder mechanisch und/oder elektromechanisch betätigbaren Bremssattel einer Scheibenbremse, der im wesentlichen als einseitig offener, topfartiger Hohlzylinder gestaltet ist, und einen Boden sowie einstückig daran eine Wandung umfasst, wobei der Boden ausgehend vom Topfinneren mit Bremsdruck beaufschlagbar ist, so dass eine auswärts gerichtete Anlagefläche des Bodens gegen einen Bremsbelag pressbar ist, und wobei das Topfinnere ein Druckstück aufnimmt.

Ein kombiniert hydraulisch und mechanisch betätigbarer Bremssattel mit einem Kolben ist aus der gattungsbildenden EP 0 396 231 A1 bekannt. Dabei weist die Wandung eine konische Fläche auf, die mit einem gesonderten Konus und mit einer gesondert vorgesehenen Gewindemutter zusammen wirkt, welche von einer Gewindespindel angetrieben wird. Die bekannte Anordnung ermöglicht ganz grundsätzlich eine Kompensation von Bremsbelagverschleiß zur Verwendung bei einer Scheibenbremse mit Feststellbremsvorrichtung. Hinweise auf eine besonders kostengünstige Bauweise einer Scheibenbremse sind dieser Schrift nicht zu entnehmen.

Weiterhin mangelt es bekannten Anordnungen an einer Adaption an elektromechanisch betätigbare Bremsaktuatoriken, bei denen eine Feststellbremsvorrichtung auf den Bremskolben mittels eines Getriebes wirkt, indem das Getriebe eine Rotationsbewegung einer Aktuatorik in eine Translationsbewegung umsetzt, und eine Betätigung des Bremskolbens zur Durchführung von Feststellbremsvorgängen bewirkt und in der betätigten Stellung hält, und wobei das Getriebe eine Gewindespindel und eine Gewindemutter aufweist.

Unabhängig davon gilt es natürlich auch, eine Lösung für den Aufbau einer Kraftfahrzeugscheibenbremse ganz ohne Feststellbremsfunktion anzugeben.

Demnach erfordern unterschiedlich ausgebildete Kraftfahrzeugbremsen und deren Aktuatoriken prinzipiell unterschiedlich gestaltete Komponenten, was sowohl in der Herstellung der Fahrzeugbremsen, als auch in einer nachgeschalteten Logistik, wie beispielsweise einer Ersatzteilversorgung, erhöhten Aufwand verursacht. Prinzipiell gleiches gilt für Kraftfahrzeugbremsen mit oder ohne Bremsbelagverschleisskompensation.

Der Erfindung liegt die prinzipielle Aufgabe zu Grunde, eine möglichst umfassende Gleichteilversorgung in der Herstellung und in der nachgeschalteten Logistik für sämtliche Fahrzeugbremsen zu ermöglichen, und den Herstellungsaufwand zu senken. Dies geht mit der Fragestellung einher, ein günstiges Baukastensystem zur Verfügung zu stellen.

Die Aufgabe wird durch die Merkmale vom Patentanspruch 1 gelöst. Erfindungsgemäß ist vorgesehen, dass ein - in den Kraftfluss integriertes - Druckstück und ein Boden einander zugewandte Konusflächen zur Bremsdruckübertragung aufweisen. Indem die Druckeinleitung über das Druckstück direkt am Boden über eine einwärts ausgestülpte Sicke des Bodens erfolgt, wird zusammen mit dem angepassten Druckstück, das gewissermaßen als Adapter wirkt, eine kostengünstige, insbesondere umformtechnische Kolbenherstellung aus Blechwerkstoff innerhalb von einem Kolbenbaukastensystem ermöglicht. Zur Verwendung der Kolben für Scheibenbremsen ohne Feststellbremsvorrichtung oder Belagverschleißkompensation kann einfach das Druckstück wegelassen werden. Die Herstellung besonders adaptierter Kolben entfällt.

Zur Einsparung axialer Baulänge kann das Druckstück mit einer zentrischen Durchgangsbohrung versehen sein.

Aufnahmen zwischen Kolben, Druckstück und Gewindemutter sind so ausgebildet, dass eine Verdrehsicherung vorliegt.

Bevorzugt weisen sämtliche Konusflächen übereinstimmende Konuswinkel auf, so dass prinzipiell ein Werkzeug ausreicht.

Eine Aussparung am Druckstück kann eine Schulter aufnehmen. Zur verbesserten Entlüftung der Aussparung empfiehlt sich wenigstens ein Durchlass.

Das Druckstück kann axial aber drehfest im Kolben festgelegt sein (umformtechnische Verpressung), oder es ist drehfest aber axial verschiebar im Kolben platziert.

Weitere Einzelheiten der Erfindung gehen aus der Beschreibung anhand der Zeichnung von Ausführungsbeispielen hervor. In der Zeichnung zeigt:
Fig. 1 eine Explosionszeichnung,
Fig. 2 einen Schnitt durch eine Kolbenanordnung,

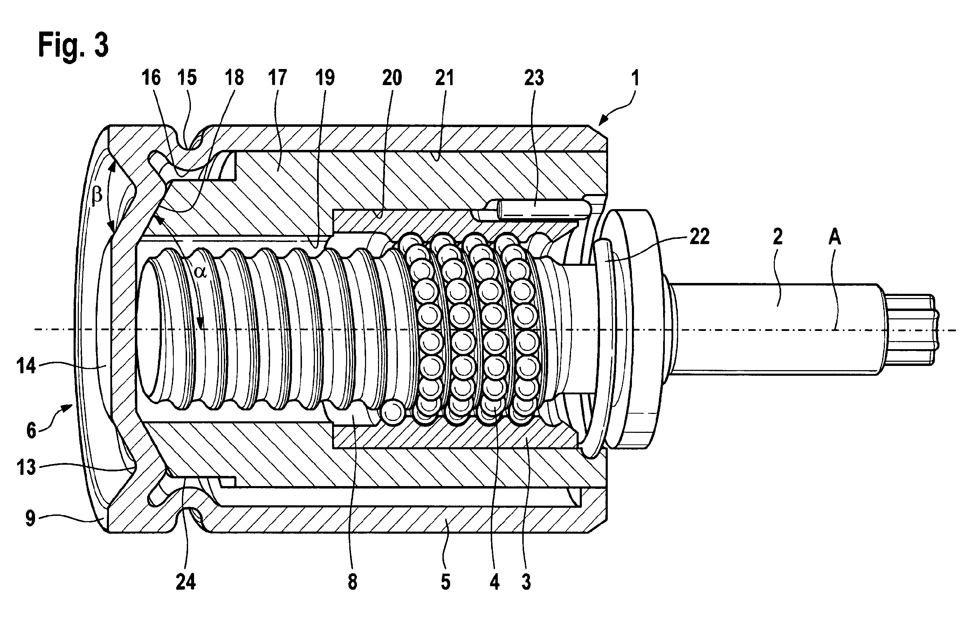

Fig. 3 weitere Einzelheiten der Kolbenanordnung nach Fig. 2, vergrößert,

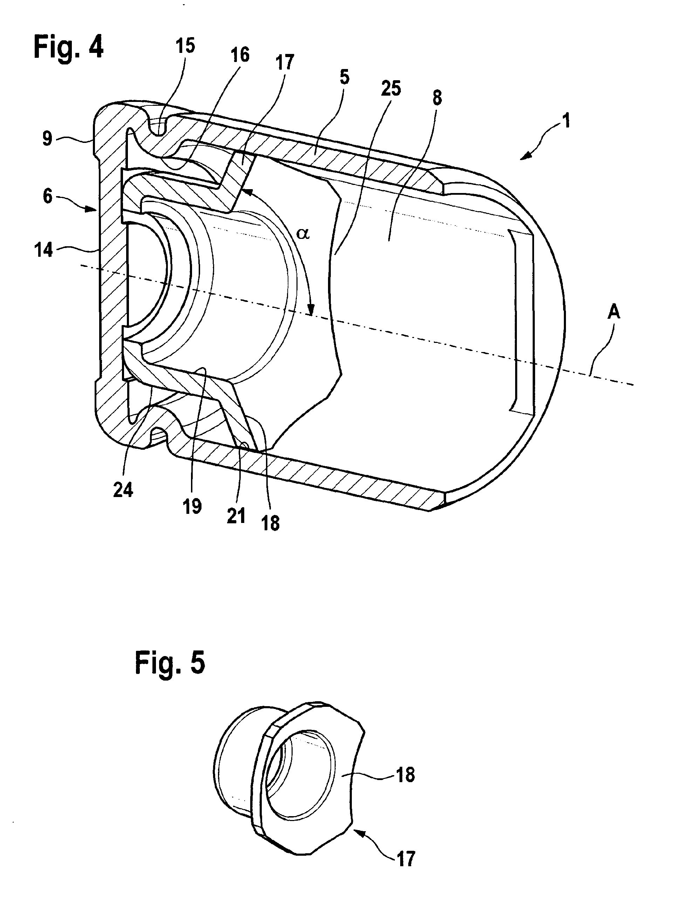

Fig. 4 Eine Variante mit Aussparung und Durchlass in Perspektive, und
Fig. 5 perspektivische Ansicht von einem Druckstück mit Abschnitt entsprechend Fig. 4.

Den Figuren sind teilweise schematisch sowie vergrößert Teile einer Scheibenbremse für ein Kraftfahrzeug zu entnehmen. Im Einzelnen sind ein Kolben 1 sowie eine darin zumindest teilweise integrierte Gewindespindel 2 mit einer Gewindemutter 3 einer Feststellbremsvorrichtung ersichtlich, welche als Getriebe wirksam sind, um eine rotatorische Antriebsdrehbewegung in eine translatorische Kolbenverschiebung bei einer sogenannten elektromechanisch betätigbaren, kombinierten Kraftfahrzeugbremse (EPB) zu wandeln. Zur Funktion und zu den Randbedingungen einer elektromechanisch betätigbaren, kombinierten Kraftfahrzeugbremse wird auf den Offenbarungsgehalt der WO2007/051809A1 der Anmelderin verwiesen.

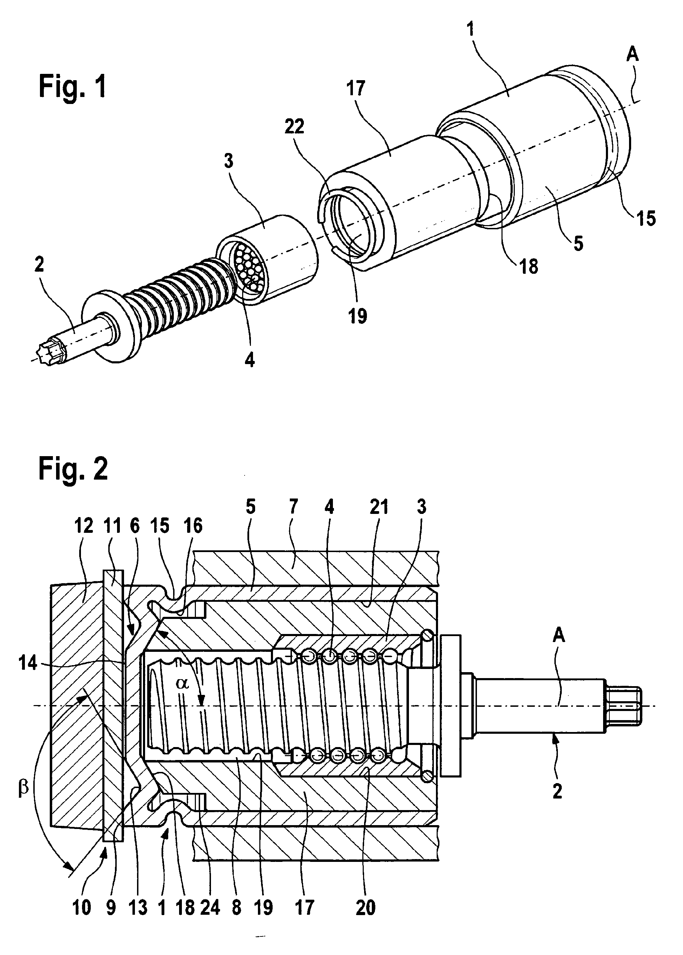

Der Kolben ist prinzipiell um eine Längsachse 4 rotationssymetrisch und als einseitig offener Hohlzylinder mit einer Wandung 5 und mit einem einstückig daran angeordneten Boden 6 gestaltet, und in einem Gehäuse 7 axial verschiebbar geführt. Meist reicht eine sogenannte Schutzkappe aus, um eine relative Verdrehung zwischen Gehäuse 7 und Kolben 1 zu verhindern. Zur Verdrehsicherung zwischen Gehäuse 7 und Kolben 1 kann auch ein, an der Wandung 5 von radial außen elastisch anliegendes, nicht gezeigtes, Dichtelement dienen. Ausgehend vom Topfinneren 8 ist der Boden 6 prinzipiell mit Druckmittel beaufschlagbar. In der Folge wird eine auswärts gerichtete, im Wesentlichen kreisringförmige, Anlagefläche 9 vom Boden 6 gegen einen Bremsbelag 10 gepresst. Der Bremsbelag 10 umfasst eine Rückenplatte 11 und einen Reibbelag 12, der eine nicht gezeichnete Bremsscheibe beaufschlagt. Obwohl es nicht im Einzelnen aus der schematischen Figur hervorgeht, kann die Anlagefläche 9 an der Rückenplatte 11 bevorzugt einen mittleren Durchmesser aufweisen, welcher im Vergleich zu einem mittleren Durchmesser der Wandung 5 reduziert ausgebildet ist. Unter Spannungsgesichtspunkten kann die Anlagefläche 9 so dimensioniert sein, dass diese größer als ein kleinster Wandungsquerschnitt an der schwächsten Stelle der Wandung 5 ausgebildet ist. Aus Festigkeitsgründen, sowie für eine definierte und reproduzierbare Krafteinleitung über die Anlagefläche 9, ist der Boden 6 in Bezug auf die Rückenplatte 11 im Übrigen derart zurückversetzt, dass prinzipiell kein weiterer direkter Kontakt an der Rückenplatte 11 vorliegt. Dies wird erreicht, indem angrenzend an die Anlagefläche 9 eine ringförmig umlaufende Sicke 13 als auch eine daran angrenzende, kreisförmige Fläche 14 vorgesehen sind, wobei beispielsweise die kreisförmige Fläche 14 zumindest geringfügig - beispielsweise um wenige Zehntelmillimeter - gegenüber der Anlagefläche 9 zurückversetzt ist. Die Sicke 13 hat - wie aus Fig. 2 ersichtlich - einen stumpfen Öffnungswinkel β, mit zwei Schenkeln, von denen der radial innere Schenkel zur Krafteinleitung durch eine Konusfläche 18 vorgesehen ist.

Zudem ist von radial außen, sowie axial zum Boden 6 versetzt, eine umlaufende Nut 15 von radial außen derart in die Wandung 5 eingebracht, dass radial innen eine umlaufende Schulter 16 vorliegt. In die Nut 15 wird prinzipiell die nicht weiter verdeutlichte Schutzkappe eingeknöpft.

Wenn die genannten Merkmale spanlos beispielsweise durch Tiefziehen, Drücken und/oder Rollieren hergestellt sind, wird in Verbindung mit metallischen Stahlblechwerkstoffen eine vorteilhafte Kaltverfestigung erzielt, so dass mit vergleichsweise geringem Werkstoffaufwand tragfähige Werkstücke entstehen, ohne einen Härteprozess zu erfordern. Es versteht sich, dass diese vorteilhaften Verfestigungen sogar erzielt werden können, wenn - beispielsweise für die Herstellung von Kolben 1 mit vergleichsweise kleinem Durchmesser eine Kalt-Massivumformung gewählt wird.

Wie aus der Figur deutlich hervorgeht, ist die Gewindemutter 3 mittelbar über ein Druckstück 17 an der Konusfläche 18 vom Boden 6 abgestützt. Dabei wird die bodenseitige Konusfläche 18 zumindest grundsätzlich durch das Prägen der Sicke 13 erhalten. Die beiden einander gegenüberliegenden Konusflächen 18 schließen in axialer Richtung mit der Längsachse A vorzugsweise einen Winkel α von etwa 60° Grad ein, wodurch eine zentrierte und definierte Anlage vom Druckstück 17 gewährleistet ist. Zwischen Gewindemutter 3 und Druckstück 17 sind in prinzipiell gleicher Bauweise Konusflächen vorgesehen, wobei besonders bevorzugt sämtliche Konusflächen übereinstimmende Konizitäten mit übereinstimmenden Öffnungswinkeln aufweisen.

Zur Verringerung vom axialen Bauraumbedarf ist vorgesehen, dass das Druckstück 17 eine zentrische Durchgangsbohrung 19 zur Aufnahme einer Gewindespindel 2 aufweist. Dies ist für eine platzsparende Spindelaufnahme - sowohl im unbetätigten Zustand bei elektromechanischen Systemen, als auch bei Verwendung von teleskopierbaren Bremsbelagnachstellvorrichtungen in Verbindung mit vergleichsweise neuwertigen Bremsbelägen 10 - besonders vorteilhaft. Also wird es ermöglicht, dass die Gewindespindel 2 große Teile von Kolben 1 und Druckstück 17 durchgreift. Für die Getriebefunktion ist es weiterhin essentiell, dass Gehäuse 7, Kolben 1, Druckstück 17 und Gewindemutter 3 relativ zueinander verdrehgesichert ausgebildet sind. Dies wird durch entsprechend ausgebildete Aufnahmen und Verdrehsicherungsmaßnahmen zwischen Gewindemutter 3 und Druckstück 17 sowie zwischen Druckstück 17 und Kolben 1 wie folgt erzielt. Für die Verdrehsicherung zwischen Druckstück 17 und Gewindemutter 3 kann ein Halteelement 22 vorgesehen sein, das einen Zapfen 23 aufweisen kann, welcher formschlüssig eine relative Verdrehung zwischen Gewindemutter 3 und Druckstück 17 verhindert.

In einer anderen Ausführungsform ist es denkbar, die Aufnahme 20 zwischen Druckstück 17 und Gewindemutter 3 mit einer von der Zylinderform abweichenden Profilierung zu versehen, die eine relative Verdrehung der involvierten Bauteile verhindert. Dies kann beispielhaft geschehen, indem eine Schlüsselfläche oder eine anders geartete konstruktiv-formschlüssige Gestaltung (Nocken, Verzahnung, Planfläche, Passfeder o.ä.) in der Aufnahme 20 integriert vorgesehen ist.

Zwischen Druckstück 17 und Wandung 5 ist beispielsweise eine Verzahnung, schlüsselflächenartige Abplattung oder ähnliches vorgesehen. Eine nicht gezeichnete Schutzkappe kann der Verdrehsicherung zwischen Kolben 1 und Gehäuse 7 dienen.

Nachdem das Druckstück 17 an einem bodenseitigen Ende über eine umfangsseitig umlaufende Aussparung 24 zur Aufnahme der Schulter 16 verfügt, ist die Schulter 16 darin aufgenommen. Damit eine derartige Aussparung 24 mit vertretbarem Aufwand im Rahmen einer Druckmittelbefüllung entlüftet werden kann, ist diese über wenigstens einen Durchlass 25 mit dem Topfinneren 8 verbunden. Die konkrete Gestaltung von dem Durchlass 25 ist bevorzugt so, dass entweder das Druckstück 17 mit einem Ausschnitt versehen ist, oder dass die Innenwandung mit einer kanalartigen Vertiefung versehen ist. Für einen besonders weiten Durchlassquerschnitt können die genannten Merkmale auch kombiniert vorgesehen sein.

Indem das das Druckstück 17 im Sinne eines Adapterteiles mit unterschiedlicher Gesamtlänge und mit unterschiedlichen Außendurchmesser sowie mit jeweils identisch übereinstimmender Konusfläche 18 und Aufnahme 20,21 für eine einheitlich ausgebildete Gewindemutter 3 vorgehalten wird, kann auf einfachem und kostengünstigem Wege ein Kolben-Baukastensystem für unterschiedliche Kolbendurchmesser unter Verwendung einer großen Anzahl von Gleichteilen ermöglicht werden, weil im Wesentlichen nur unterschiedlich im Durchmesser dimensionierte Kolbentöpfe mit daran angepassten Druckstücken 17 und Gehäusen 7 notwendig sind.

### Bezugszeichenliste

- 1: Kolben
- 2: Gewindespindel
- 3: Gewindemutter
- 4: Wälzelemente
- 5: Wandung
- 6: Boden
- 7: Gehäuse
- 8: Topfinneres
- 9: Anlagefläche
- 10: Bremsbelag
- 11: Rückenplatte
- 12: Reibbelag
- 13: Sicke
- 14: Fläche
- 15: Nut
- 16: Schulter
- 17: Druckstück
- 18: Konusfläche
- 19: Durchgangsbohrung
- 20: Aufnahme
- 21: Aufnahme
- 22: Halteelement
- 23: Zapfen
- 24: Aussparung
- 25: Durchlass

- A: Längsachse
- α: Winkel
- β: Winkel

## Patentansprüche

1. Mehrteilig gebauter Kolben (1) für einen Bremssattel einer hydraulisch und/oder mechanisch und/oder elektromechanisch betätigbaren Scheibenbremse, der im wesentlichen als einseitig offener, topfartiger Hohlzylinder gestaltet ist, und einen Boden (6) sowie einstückig daran eine Wandung (5) umfasst, wobei der Boden (6) ausgehend vom Topfinneren (8) mit Bremsdruck beaufschlagbar ist, so dass eine auswärts gerichtete Anlagefläche (9) des Bodens (6) gegen einen Bremsbelag (10) pressbar ist, und wobei das Topfinnere (8) wenigstens ein Druckstück (17) aufnimmt, das insbesondere in einen Kraftfluss von einem Feststellbremsmechanismus eingebunden ist, indem eine Gewindemutter (3) mittelbar über das Druckstück (17) zur Kraftübertragung an einer Konusfläche vom Boden (6) abgestützt ist, **dadurch gekennzeichnet, dass** eine Innenwandung von dem Kolben (1) eine Aufnahme (21) für das Druckstück (17) aufweist, und wobei das Druckstück (17) durch eine Profilierung zwichen Druchstrüch (17) und Wandung (5) verdrehsicher im Kolben (1) angeordnet ist.

2. Kolben nach Anspruch 1, **dadurch gekennzeichnet, dass** das Druckstück (17) eine zentrische Durchgangsbohrung (19) zur Aufnahme einer Gewindespindel (2) aufweist.

3. Kolben nach Anspruch 1, **dadurch gekennzeichnet, dass** das Druckstück (17) eine Aufnahme (20) und eine Konusfläche zur Kraftübertragung durch die Gewindemutter (3) aufweist.

4. Kolben nach Anspruch 1 und 3, **dadurch gekennzeichnet, dass** alle Konusflächen (18) identische Konizität aufweisen.

5. Kolben nach Anspruch 3 oder 3, **dadurch gekennzeichnet, dass** die Gewindemutter (3) relativ zur Aufnahme (20) verdrehgesichert ist, indem eine Profilierung vorgesehen ist.

6. Kolben nach Anspruch 3 oder 5, **dadurch gekennzeichnet, dass** die Gewindemutter (3) relativ zur Aufnahme (20) verdrehgesichert ist, indem ein Halteelement (22) vorgesehen ist.

7. Kolben nach Anspruch 1, **dadurch gekennzeichnet, dass** das Druckstück (17) an einem bodenseitigen Ende sowie am Umfang eine Aussparung (24) für die Aufnahme einer Sicke (13) aufweist.

8. Kolben nach Anspruch 7, **dadurch gekennzeichnet, dass** zwischen Topfinneren (8) und Aussparung (24) wenigstens ein Durchlass (25) vorgesehen ist, indem am Druckstück (17) ein Abschnitt und/oder an der Innenwandung eine Vertiefung vorgesehen ist.

9. Kolben nach Anspruch 3, **dadurch gekennzeichnet, dass** das Druckstück (17), zur Ausbildung von einem Baukastensystem, als Adapterteil mit unterschiedlicher Gesamtlänge und mit unterschiedlichem Außendurchmesser sowie mit jeweils identisch übereinstimmender Konusfläche (18) und Aufnahme (20) für eine einheitliche Gewindemutter (3) ausgebildet ist.

## Claims

1. Multi-part piston (1) for a brake caliper of a hydraulically and/or mechanically and/or electromechanically actuatable disk brake, which piston (1) is substantially in the form of a pot-like hollow cylinder which is open at one end and includes a base (6) and a wall (5) formed integrally thereon, wherein the base (6) can be subjected to brake pressure coming from the interior (8) of the pot, so that an outwardly oriented abutment face (9) of the base (6) can be pressed against a brake pad (10), and wherein the interior (8) of the pot receives at least one pressure piece (17) which is incorporated, in particular, in a power flow of a parking brake mechanism, by a threaded nut (3) being supported indirectly via the pressure piece (17) on a conical surface of the base (6) for the transmission of power, **characterized in that** an inner wall of the piston (1) has a receptacle (21) for the pressure piece (17), and wherein the pressure piece (17) is arranged in the piston (1) in a rotationally fixed manner by means of a profiling between the pressure piece (17) and the wall (5).

2. Piston according to Claim 1, **characterized in that** the pressure piece (17) has a central through-bore (19) for receiving a threaded spindle (2).

3. Piston according to Claim 1, **characterized in that** the pressure piece (17) has a receptacle (20) and a conical surface for transmitting power through a threaded nut (3).

4. Piston according to Claims 1 and 3, **characterized in that** all the conical surfaces (18) have identical conicity.

5. Piston according to Claim 3 or 4, **characterized in that** the threaded nut (3) is prevented from rotating relative to the receptacle (20) by the provision of a profiling.

6. Piston according to Claim 3 or 5, **characterized in that** the threaded nut (3) is prevented from rotating relative to the receptacle (20) by the provision of a holding element (22).

7. Piston according to Claim 1, **characterized in that** the pressure piece (17) has at an end oriented towards the base and on its circumference a recess (24) for receiving a bead (13).

8. Piston according to Claim 7, **characterized in that** at least one passage (25) is provided between the interior (8) of the pot and the recess (24), **in that** there is provided a cut-away portion of the pressure piece (17) and/or a depression in the inner wall.

9. Piston according to Claim 3, **characterized in that,** in order to produce a modular system, the pressure piece (17) is in the form of an adapter part with a variable overall length and a variable external diameter, and with an identically matching conical surface (18) and receptacle (20) for a uniform threaded nut (3) in each case.

## Revendications

1. Piston en plusieurs parties (1) pour un étrier d'un frein à disque actionnable de manière hydraulique et/ou mécanique et/ou électromécanique qui est formé essentiellement en tant que cylindre creux ouvert d'un côté et en forme de pot, et comprend un fond (6) ainsi qu'une cloison (5) d'un seul tenant sur celui-ci, le fond (6), partant de l'intérieur du pot (8), pouvant être sollicité par une pression de freinage, de sorte qu'une surface d'appui (9) du fond (6) dirigée vers l'extérieur peut être appuyée contre une garniture de frein (10), et l'intérieur du pot (8) recevant au moins une pièce de poussée (17) qui est intégrée en particulier dans un flux de force d'un mécanisme de freinage de blocage, un écrou fileté (3) étant appuyé sur une surface conique du fond (6) indirectement via la pièce de poussée (17) pour la transmission de force, **caractérisé en ce qu'**une cloison intérieure du piston (1) présente un logement (21) pour la pièce de poussée (17) et la pièce de poussée (17) étant disposée de façon résistante à la torsion dans le piston (1) par un profilage entre la pièce de poussée (17) et la cloison (5).

2. Piston selon la revendication 1, **caractérisé en ce que** la pièce de poussée (17) présente un alésage traversant centrique (19) pour recevoir une tige filetée (2).

3. Piston selon la revendication 1, **caractérisé en ce que** la pièce de poussée (17) présente un logement (20) et une surface conique pour la transmission de force via l'écrou fileté (3).

4. Piston selon les revendications 1 et 3, **caractérisé en ce que** toutes les surfaces coniques (18) présentent une conicité identique.

5. Piston selon la revendication 3 ou 4, **caractérisé en ce que** l'écrou fileté (3) est résistant à la torsion par rapport au logement (20), en prévoyant un profilage.

6. Piston selon la revendication 3 ou 5, **caractérisé en ce que** l'écrou fileté (3) est résistant à la torsion par rapport au logement (20), en prévoyant un élément de retenue (22).

7. Piston selon la revendication 1, **caractérisé en ce que** la pièce de poussée (17) présente sur une extrémité côté fond, ainsi que sur le pourtour, un évidement (24) pour recevoir un collet (13).

8. Piston selon la revendication 7, **caractérisé en ce qu'**au moins un passage (25) est prévu entre l'intérieur du pot (8) et l'évidement (24), une découpe sur la pièce de poussée (17) et/ou un creux sur la cloison intérieure étant prévus.

9. Piston selon la revendication 3, **caractérisé en ce que** la pièce de poussée (17) est formée, pour former un système modulaire, en tant que pièce adaptatrice avec une longueur totale variable et un diamètre extérieur variable ainsi qu'avec une surface conique (18) correspondant de manière respectivement identique et un logement (20) pour un écrou fileté (3) homogène.
